# EUROPÄISCHE PATENTSCHRIFT

(11) **EP 3 501 351 B1**
(45) Veröffentlichungstag und Bekanntmachung des Hinweises auf die Patenterteilung: **09.06.2021**
(21) Anmeldenummer: 18210613.8
(22) Anmeldetag: 06.12.2018
(51) Int. Cl.: A47J 31/60

(54) **GETRÄNKEAUTOMAT**
BEVERAGE MACHINE
DISTRIBUTEUR AUTOMATIQUE DE BOISSONS

(30) Priorität: 22.12.2017 DE 102017223781
(43) Veröffentlichungstag der Anmeldung: 26.06.2019
(73) Patentinhaber: BSH Hausgeräte GmbH, 81739 München (DE)
(72) Erfinder: Beck, Rudolf, 84518 Garching a. d. Alz (DE); Mathes, Anton, 83364 Neukirchen am Teisenberg (DE); Mies, Maximilian, 83253 Rimsting (DE)

(56) Entgegenhaltungen:
- EP-A1- 2 078 481
- DE-A1-102013 105 161
- FR-A1- 2 929 090

## Beschreibung

Die Erfindung betrifft einen Getränkeautomaten, insbesondere ein Kaffeevollautomaten, gemäß dem Oberbegriff des Anspruchs 1. Die Erfindung betrifft auch ein Verfahren zum Steuern des Getränkeautomaten gemäß dem Oberbegriff des Anspruchs 12.

Getränkeautomaten, wie beispielsweise Kaffeevollautomaten, sind bereits bekannt, z.B. aus DE 10 2013 105161 A1, FR 2 929 090 A1 oder EP 2 078 481 A1. Ein Getränkeautomat weist dabei ein Fluidsystem für Frischwasser mit mehreren Fluidleitungen, Ventilen, Heizeinrichtungen sowie weiteren wasser- und dampfführenden Komponenten auf. Als Frischwasser wird üblicherweise Brauchwasser verwendet, was zu einer Kalkablagerung im Fluidsystem führt. Aus diesem Grund muss das Fluidsystem des Getränkeautomaten in regelmäßigen Abständen entkalkt werden. Dazu wird in einem Wasservorratsbehälter ein flüssiges Entkalkungsmittel bereitgestellt, das beim Entkalken erwärmt und durch das Fluidsystem gefördert wird. Das Entkalkungsmittel löst dabei die Kalkablagerungen in dem Fluidsystem auf, die nachfolgend aus dem Fluidsystem ausgespült werden können. Ferner setzen sich beim Zubereiten der Getränke - wie beispielsweise Kaffee - auch organische Komponenten im Fluidsystem ab. Diese können neben einer Verstopfung in Fluidleitungen auch einen Wachstum von Bakterien und Pilzen im Fluidsystem verursachen. Insbesondere aus hygienischen Gründen müssen die organischen Komponenten in regelmäßigen Abständen entfernt werden. Dazu wird das Fluidsystem üblicherweise mit einem Reinigungsmittel durchgespült, wobei eine Reinigungstablette in einen Brühraum des Getränkeautomaten eingelegt und mit heißem Frischwasser zu dem Reinigungsmittel aufgelöst wird. Das Reinigungsmittel wird durch das Fluidsystem gefördert und die organischen Komponenten werden aus dem Fluidsystem entfernt.

Sowohl das Entkalken als auch das Reinigen des Getränkeautomaten werden üblicherweise von einem Benutzer manuell gestartet und über mehrere Handlungsschritte durchgeführt. Das Entkalken und das Reinigen des Getränkeautomaten sind für den Benutzer aufgrund der hohen Anzahl der Handlungsschritte und der Wartezeit zwischen den einzelnen Handlungsschritten sehr zeitaufwändig. Um die Anzahl der Handlungsschritte zu reduzieren, kann beispielsweise das Entkalkungsmittel oder das Reinigungsmittel in einer Kartusche bereitgestellt und das Entkalken oder das Reinigen automatisch gestartet werden. Aus dem Stand der Technik sind einige Lösungen dazu bekannt.

So beschreibt beispielsweise die EP 2 705 784 B1 ein Entkalkungssystem mit einer Kartusche, in der das Entkalkungsmittel in einer flüssigen Form oder als Pulver vorrätig bereitgestellt wird. In der Kartusche ist ein Ventil vorgesehen, das beim Entkalken Frischwasser durch die Kartusche fördern lässt. Auf diese Weise wird das verdünnte oder gelöste Entkalkungsmittel aus der Kartusche in das Fluidsystem gefördert und der Getränkeautomat wird über eine ausreichende Zeitdauer von mindestens vier Stunden - beispielsweise über Nacht - entkalkt.

In der WO 2013/23963 A1 ist eine ähnliche Lösung beschrieben, bei der ein Reinigungsmittel in der Kartusche bereitgestellt und über eine in die Kartusche eingebaute Pumpe in das Fluidsystem gefördert wird. Die Pumpe wird dabei über einen Aktor des Getränkeautomaten angetrieben.

Die EP 2 020 198 B1 beschreibt ein Überwachungssystem, mit dem ein Leerstand der Kartusche mit einem flüssigen Lebensmittel erkannt wird. Das flüssige Lebensmittel wird dabei aus der Kartusche in Form eines Beutels mit einer Pumpe gesaugt. Der Ansaugbereich in der Kartusche wird drucküberwacht und beim steigenden Unterdruck erkennt das Überwachungssystem den Leerstand der Kartusche.

Nachteiligerweise können bei den bekannten Lösungen das Entkalkungsmittel oder das Reinigungsmittel nur schwer beziehungsweise aufwendig genau dosiert werden und der Verbrauch des Entkalkungsmittels oder des Reinigungsmittels ist dadurch unnötig hoch. Ferner sind einige dieser Lösungen teuer in der Herstellung.

Die Aufgabe der vorliegenden Erfindung ist es, für einen Getränkeautomaten der gattungsgemäßen Art eine verbesserte oder zumindest alternative Ausführungsform anzugeben, bei der die beschriebenen Nachteile überwunden werden. Ferner soll auch ein verbessertes oder zumindest alternatives Verfahren zum Steuern des Getränkeautomaten angegeben werden.

Diese Aufgaben werden erfindungsgemäß durch den Gegenstand der unabhängigen Ansprüche 1 und 12 gelöst. Vorteilhafte Ausführungsformen sind Gegenstand der abhängigen Ansprüche.

Ein gattungsgemäßer Getränkeautomat, insbesondere ein Kaffeevollautomat, weist ein Fluidsystem zum Bereitstellen von Frischwasser und eine Förderpumpe zum Fördern von Frischwasser von einer Ansaugstelle durch das Fluidsystem auf. Der Getränkeautomat weist ferner wenigstens eine auswechselbare Kartusche auf, die über eine Dosierleitung an einer Mündungsstelle fluidleitend mit dem Fluidsystem verbunden ist. Ein flüssiges Pflegemittel ist dabei aus der wenigstens einen Kartusche über eine Kopplungsvorrichtung in die jeweilige Dosierleitung und weiter in das Fluidsystem förderbar. Erfindungsgemäß weist der Getränkeautomat wenigstens eine Dosierpumpe auf, die in dem Getränkeautomat zwischen der jeweiligen Kopplungsvorrichtung und der jeweiligen Mündungsstelle an der jeweiligen Dosierleitung fluidisch angeschlossen ist. Die Dosierpumpe ist an die Dosierleitung fluidisch angeschlossen und kann das Pflegemittel aus der Kartusche in das Fluidsystem des Getränkeautomaten fördern. Das Pflegemittel kann dabei ein Entkalkungsmittel oder ein Reinigungsmittel oder eine Mischung aus beiden sein. Die Kartusche ist über die Kopplungsvorrichtung an die Dosierleitung angeschlossen und ist zweckgemäß auswechselbar. Die Dosierpumpe ist in dem Getränkeautomat festinstalliert, so dass die Kartusche ohne eine zusätzliche Fördervorrichtung ausgestaltet sein kann und im Vergleich zu herkömmlichen Lösungen kostengünstiger herstellbar ist. Ferner fördert die Dosierpumpe das unverdünnte Pflegemittel in das Fluidsystem, das erst in dem Fluidsystem mit Frischwasser gemischt wird. Das Pflegemittel kann auf diese Weise präziser dosiert und der Verbrauch des Pflegemittels im Vergleich zu herkömmlichen Lösungen reduziert werden.

Erfindungsgemäß ist die Mündungsstelle unmittelbar und stromab an der Ansaugstelle angeordnet. Das geförderte Pflegemittel fließt beim Pflegen des Getränkeautomaten an der Mündungsstelle in das Fluidsystem ein, so dass das Fluidsystem ab der Mündungsstelle mit dem Pflegemittel gepflegt ist. Durch die unmittelbar an der Ansaugstelle angeordnete Mündungsstelle ist das Fluidsystem vorteilhafterweise nahezu vollständig mit dem Pflegemittel durchströmbar. Ferner kann das Frischwasser in dem Wasservorratsbehälter auch bei der an einen Wasservorratsbehälter anschließenden Ansaugstelle beim Pflegen des Getränkeautomaten nicht mit dem Pflegemittel verunreinigt werden. Vorteilhafterweise entfällt dadurch ein zusätzliches Reinigen des Wasservorratsbehälters nach dem Pflegen des Getränkeautomaten.

Um im Normallbetrieb des Getränkeautomaten ein Einströmen des Pflegemittels aus der Kartusche in das Fluidsystem zu verhindern, kann zwischen der Mündungsstelle und der Dosierpumpe ein Auslaufsperrelement vorgesehen sein. Das Auslaufsperrelement kann beispielsweise ein Überdruckventil sein. Zweckgemäß ist der Öffnungsdruck des Überdruckventils an den Unterdruck der Förderpumpe angepasst, so dass der Unterdruck der Förderpumpe das Überdruckventil nicht öffnet. Alternativ kann das Auslaufsperrelement auch ein steuerbares Ventil, bevorzugt ein Magnetventil, ein keramisches Scheibenventil oder ein Stößelventil, sein.

Bei einer Weiterbildung der erfindungsgemäßen Lösung ist vorgesehen, dass die Kartusche einen Kopplungskopf aufweist, der an der Kopplungsvorrichtung fluidleitend und lösbar festlegbar ist. Zwischen der Kopplungsvorrichtung und dem Kopplungskopf ist zweckgemäß eine Durchlaufleitung für das Pflegemittel gebildet, so dass nach dem Anschließen der Kartusche an die Kopplungsvorrichtung das Pflegemittel aus der Kartusche in das Fluidsystem über die Kopplungsvorrichtung fließen kann. Der Kopplungskopf der Kartusche ist von der Kopplungsvorrichtung lösbar und die Kartusche dadurch auswechselbar.

Vorteilhafterweise kann vorgesehen sein, dass die Kopplungsvorrichtung ein Öffnungselement und der Kopplungskopf eine Verriegelungseinrichtung aufweisen, wobei das Öffnungselement und die Verriegelungseinrichtung zusammenwirken und die Kartusche und die Dosierleitung fluidisch verbinden. Vorteilhafterweise kann die Kartusche vor dem Anschließen an das Fluidsystem durch die Verriegelungseinrichtung fluiddicht verschlossen sein und das Pflegemittel in der Kartusche auslaufsicher aufbewahrt und transportiert werden. Beim Anschließen der Kartusche an das Fluidsystem wirkt das Öffnungselement mit der Verriegelungseinrichtung zusammen und die Kartusche wird an das Fluidsystem über die Dosierleitung fluidleitend angeschlossen. Die Verriegelungseinrichtung und das Öffnungselement können beispielsweise ein Sperrventil - beispielsweise ein Rücklaufsperrventil - und ein mit dem Sperrventil zusammenwirkender Ventilöffner sein. Beim Anschließen der Kartusche an das Fluidsystem betätigt und öffnet der Ventilöffner das Sperrventil in der Kartusche, so dass diese fluidleitend über die Dosierleitung an das Fluidsystem angeschlossen wird. Ist die Kartusche nicht an die Dosierleitung und an das Fluidsystem angeschlossen, so ist das Sperrventil geschlossen und das Pflegemittel auslaufsicher in der Kartusche aufbewahrt. Alternativ können die Verriegelungseinrichtung eine Versiegelungsfolie und das Öffnungselement ein Durchstecher sein.

Um das Pflegemittel aus der Kartusche ohne einen Ausgleichsvolumen zu fördern, kann die Kartusche einen verformbaren und nach außen dichten Pflegemittelbeutel für das Pflegemittel aufweisen. Alternativ kann die Kartusche einen nach außen dichten Pflegemittelbehälter und einen in dem Pflegemittelbehälter zumindest zu der Kopplungsvorrichtung hin verschiebbaren Dichtkolben beziehungsweise einen Schwimmeraufweisen. Die Kartusche kann ferner nachfüllbar sein. So kann beispielsweise die Kartusche an eine Nachfüllflasche anschließbar und die Kartusche mit dem Pflegemittel nachfüllbar sein. Ein Nachfüllkopf mit einer Nachfüllöffnung an der Nachfüllflasche kann dabei an den Kopplungskopf der Kartusche angepasst sein, so dass beispielsweise das Sperrventil in dem Kopplungskopf der Kartusche auch durch den Nachfüllkopf der Nachfüllflasche betätigbar ist. Um ein druckfestes Nachfüllen zu ermöglichen, kann zudem ein zusätzlicher Halteverschluss - beispielsweise ein Bajonettverschluss - an dem Kopplungskopf der Kartusche und an dem Nachfüllkopf der Nachfüllflasche ausgebildet sein.

Bei einer Weiterbildung des erfindungsgemäßen Getränkeautomaten ist vorteilhafterweise vorgesehen, dass der Getränkeautomat zwei Kartuschen und zwei Dosierpumpen aufweist, die das Pflegemittel aus der jeweiligen Kartusche in das Fluidsystem fördern können. Die jeweiligen Kartuschen können beispielsweise das identische oder jedoch abweichende Pflegemittel aufweisen. So kann beispielsweise in der ersten Kartusche ein Entkalkungsmittel und in der zweiten Kartusche ein Reinigungsmittel enthalten sein. Entsprechend sind das Reinigen und das Entkalken des Getränkeautomaten unabhängig voneinander durchführbar und dadurch auch effektiver. Alternativ kann der Getränkeautomat zwei Kartuschen und eine Dosierpumpe mit einem Umschaltventil aufweisen, die das Pflegemittel aus den jeweiligen Kartuschen abwechselnd fördern kann. Bei dieser Lösung weist der Getränkeautomat nur eine einzige Dosierpumpe mit dem Umschaltventil auf, wodurch die Herstellungskosten des Getränkeautomaten reduziert werden können.

Vorteilhafterweise kann vorgesehen sein, dass der Getränkeautomat eine Steuereinrichtung aufweist, die die Förderpumpe und die wenigstens eine Dosierpumpe steuert. Dabei sind ein Arbeitstakt der wenigstens einen Dosierpumpe und ein Arbeitstakt der Förderpumpe abhängig voneinander steuerbar. So kann der Arbeitstakt der Förderpumpe ein Vielfaches des Arbeitstakts der Dosierpumpe sein. Beispielsweise kann der Arbeitstakt der Förderpumpe ein Zehnfaches des Arbeitstakts der Dosierpumpe sein, wodurch das Pflegemittel mit Frischwasser im Verhältnis 1 zu 10 verdünnt wird. Die Dosiergenauigkeit hängt dabei im Wesentlichen von der Viskosität des Pflegemittels und des Frischwassers sowie von der Förderleistung der Förderpumpe und der Dosierpumpe ab. Vorteilhafterweise kann das Vielfache von einer Arbeitsbelastung des Getränkeautomaten abhängen. Wird der Getränkeautomat schwach beziehungsweise stark belastet, so kann beim Pflegen des Getränkeautomaten das Pflegemittel stärker beziehungsweise schwächer verdünnt werden. Insbesondere kann dadurch der Verbrauch des Pflegemittels bei einem in regelmäßigen Abständen gepflegten Getränkeautomat reduziert werden. Um eine besonders genaue Dosierung des Pflegemittels zu erzielen, können die Förderpumpe und die Dosierpumpe jeweils eine Kolbenpumpe sein und baugleich ausgestaltet sein.

Vorteilhafterweise kann der Getränkeautomat ein steuerbares Erkennungssystem aufweisen, das ein Anschließen der Kartusche an die Dosierleitung erkennt. Alternativ oder zusätzlich kann vorgesehen sein, dass der Getränkeautomat ein Füllstanderkennungssystem aufweist, das einen Füllstand des Pflegemittels in der Kartusche erkennt. Das Füllstanderkennungssystem ist bevorzugt magnetisch oder druckgesteuert. Das magnetische Füllstanderkennungssystem ist beispielsweise bei der Kartusche mit dem Pflegemittelbehälter und dem verschiebbaren Dichtkolben einsetzbar. Dabei können ein Magnet an dem verschiebbaren Dichtkolben und ein den Magnet erkennender Magnetfeldsensor an dem Pflegemittelbehälter festgelegt sein. Dabei sind der Magnet und der Magnetfeldsensor derart zueinander angeordnet, dass der Magnet sich beim Leeren der Kartusche an den Magnetfeldsensor nähert. Der Magnet beeinflusst dabei den Magnetfeldsensor immer stärker und das Füllstanderkennungssystem kann dadurch den Füllstand der Kartusche erkennen. Das alternative druckgesteuerte Füllstanderkennungssystem ist beispielsweise bei der Kartusche mit dem verformbaren Pflegemittelbeutel einsetzbar. Dabei kann ein Drucksensor in der Kartusche oder in der Dosierleitung stromauf der Dosierpumpe festgelegt sein. Der Drucksensor erfasst den steigenden Unterdruck beim Leersaugen der Kartusche und dadurch erkennt das druckgesteuerte Füllstanderkennungssystem den Füllstand der Kartusche. Um den Füllstand sowie das Anschließen der Kartusche an einen Benutzer zu melden, kann der Getränkeautomat ein steuerbares Meldesystem mit einem Display und/oder mit einer Lichtanzeige aufweisen.

Insgesamt kann das Pflegen des erfindungsgemäßen Getränkeautomaten effektiv und vereinfacht durchgeführt und der Zeitaufwand eines Benutzers deutlich reduziert werden. Ferner kann das Pflegemittel in dem erfindungsgemäßen Getränkeautomat genau dosiert und dadurch der Verbrauch des Pflegemittels vorteilhaft reduziert werden.

Die Erfindung betrifft auch ein Verfahren zum Steuern des oben beschriebenen Getränkeautomaten. In dem Verfahren stellt ein Fluidsystem des Getränkeautomaten Frischwasser bereit und eine Förderpumpe des Getränkeautomaten fördert Frischwasser von einer Ansaugstelle in das Fluidsystem. Dabei schließt wenigstens eine auswechselbare Kartusche des Getränkeautomaten über eine Dosierleitung an einer Mündungsstelle in das Fluidsystem fluidisch an und ein flüssiges Pflegemittel kann aus der Kartusche über eine Kopplungsvorrichtung in die Dosierleitung und weiter in das Fluidsystem gefördert werden. Erfindungsgemäß steuert eine Steuereinrichtung die Förderpumpe und die wenigstens eine Dosierpumpe abhängig voneinander.

Dabei können ein Arbeitstakt der wenigstens einen Dosierpumpe und ein Arbeitstakt der Förderpumpe von der Steuereinrichtung aneinander angepasst werden. Vorteilhafterweise kann die Förderpumpe um ein Vielfaches öfter als die Dosierpumpe eingeschaltet werden. Beispielsweise kann der Förderpumpe um ein Zehnfaches öfter als die Dosierpumpe eingeschaltet werden, wodurch das Pflegemittel mit dem Frischwasser im Verhältnis 1 zu 10 verdünnt wird. Die Dosiergenauigkeit hängt dabei im Wesentlichen von der Viskosität des Pflegemittels und des Frischwassers sowie von der Förderleistung der Förderpumpe und der Dosierpumpe ab. Um eine besonders genaue Dosierung des Pflegemittels zu erzielen, können die Förderpumpe und die Dosierpumpe jeweils eine baugleiche Kolbenpumpe sein. Vorteilhafterweise kann das Vielfache von einer Arbeitsbelastung des Getränkeautomaten abhängig eingestellt werden. Wird der Getränkeautomat schwach beziehungsweise stark belastet, so kann beim Pflegen des Getränkeautomaten das Pflegemittel stärker beziehungsweise schwächer verdünnt werden. Insbesondere kann dadurch der Verbrauch des Pflegemittels bei einem in regelmäßigen Abständen gepflegten Getränkeautomat reduziert werden.

Vorteilhafterweise kann vorgesehen sein, dass ein Erkennungssystem ein Anschließen der Kartusche an die Dosierleitung erkennt und an die Steuereinrichtung weiterleitet. Alternativ oder zusätzlich kann ein bevorzugt magnetisches oder druckgesteuertes Füllstanderkennungssystem einen Füllstand des Pflegemittels in der Kartusche erkennen und an die Steuereinrichtung weiterleiten. Das magnetische Füllstanderkennungssystem kann den Füllstand beispielsweise in der Kartusche mit dem Pflegemittelbehälter und dem verschiebbaren Dichtkolben erkennen. Dabei wird ein Magnet an dem verschiebbaren Dichtkolben relativ zu einem Magnetfeldsensor an dem Pflegemittelbehälter beim Leeren der Kartusche genähert. Der Magnetfeldsensor erkennt den Magnet und dadurch erkennt auch das Füllstanderkennungssystem den Füllstand der Kartusche. Das alternative druckgesteuerte Füllstanderkennungssystem kann den Füllstand beispielsweise in der Kartusche mit dem verformbaren Pflegemittelbeutel erkennen. Dabei wird ein Drucksensor in der Kartusche oder in der Dosierleitung stromauf der Dosierpumpe festgelegt. Der Drucksensor erfasst den steigenden Unterdruck beim Leersaugen der Kartusche und dadurch erkennt das druckgesteuerte Füllstanderkennungssystem den Füllstand der Kartusche. Alternativ kann das Füllstanderkennungssystem den Füllstand der Kartusche auch aus Kenngrößen einer Pflegehäufigkeit des Getränkeautomaten erschließen. Vorteilhafterweise kann vorgesehen sein, dass ein steuerbares Meldesystem mit einem Display und/oder mit einer Lichtanzeige den Füllstand und/oder das Anschließen der Kartusche an einen Benutzer meldet.

Insgesamt wird der Getränkeautomat mit dem erfindungsgemäßen Verfahren effektiv gesteuert und das Pflegen des Getränkeautomaten vereinfacht. Insbesondere kann dadurch der Zeitaufwand eines Benutzers beim Pflegen des Getränkeautomaten reduziert werden. Ferner kann das Pflegemittel genau dosiert und dadurch der Verbrauch des Pflegemittels vorteilhaft reduziert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: ein Blockschema eines erfindungsgemäßen Getränkeautomaten, das mit einem erfindungsgemäßen Verfahren steuerbar ist;
- Fig. 2: eine Ansicht einer Kartusche in einem erfindungsgemäßen Getränkeautomat, wobei die Kartusche einen verformbaren und nach außen dichten Pflegemittelbeutel aufweist;
- Fig. 3: eine Ansicht einer Kartusche in einem erfindungsgemäßen Getränkeautomat, wobei die Kartusche einen nach außen dichten Pflegemittelbehälter und einen verschiebbaren Dichtkolben aufweist.

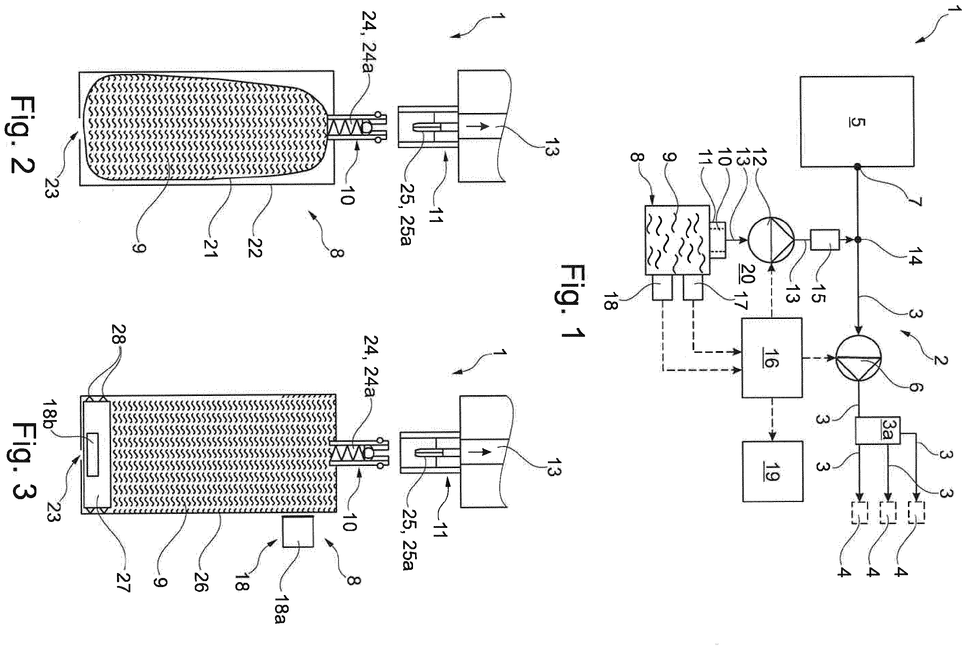

Fig. 1 zeigt ein Blockschema eines erfindungsgemäßen Getränkeautomaten 1, der beispielsweise ein Kaffeevollautomat ist. Der Getränkeautomat 1 weist ein Fluidsystem 2 mit mehreren Fluidleitungen 3 auf, über die Frischwasser mittels einer Schaltvorrichtung 3a mit mehreren Ventilen zu weiteren Komponenten 4 des Getränkeautomaten 1 wahlweise geleitet wird. Das Frischwasser ist dabei in einem Wasservorratsbehälter 5 bereitgestellt und durch eine Förderpumpe 6 von einer Ansaugstelle 7 über die Fluidleitungen 3 förderbar. Der Getränkeautomat 1 weist ferner eine auswechselbare Kartusche 8 mit einem flüssigen Pflegemittel 9 auf, das ein Entkalkungsmittel oder ein Reinigungsmittel oder eine Mischung aus beiden ist. Ein Kopplungskopf 10 der Kartusche 8 wirkt dabei mit einer Kopplungsvorrichtung 11 zusammen, die die Kartusche 8 fluidleitend mit dem Fluidsystem 2 verbindet. Der Kopplungskopf 10 der Kartusche 8 ist von der Kopplungsvorrichtung 11 lösbar und die Kartusche 8 dadurch auswechselbar.

Das Pflegemittel 9 ist aus der Kartusche 8 durch eine Dosierpumpe 12 förderbar, die an einer Dosierleitung 13 zwischen der Kopplungsvorrichtung 11 und einer Mündungsstelle 14 angeordnet ist. Die Mündungsstelle 14 liegt dabei unmittelbar und stromab an der Ansaugstelle 7, so dass das Fluidsystem 2 vorteilhafterweise nahe vollständig mit dem Pflegemittel 9 durchströmbar ist. Zwischen der Mündungsstelle 14 und der Dosierpumpe 12 ist ferner ein Auslaufsperrelement 15 - beispielsweise ein Überdruckventil oder ein steuerbares Ventil - vorgesehen, das im Normalbetrieb des Getränkeautomaten 1 ein unerwünschtes Auslaufen des Pflegemittels 9 in die Fluidleitungen 3 verhindert. Die Dosierpumpe 12 ist in dem Getränkeautomat 1 festinstalliert, so dass die auswechselbare Kartusche 8 keine zusätzliche Fördervorrichtung braucht und kostengünstig herstellbar ist.

Der Getränkeautomat 1 weist ferner eine Steuereinrichtung 16 auf, die die Förderpumpe 6 und die Dosierpumpe 12 steuert, wobei ein Arbeitstakt der Förderpumpe 6 und ein Arbeitstakt der Dosierpumpe 12 abhängig voneinander steuerbar sind. Dabei sind der Arbeitstakt der Förderpumpe 6 und der Arbeitstakt der Dosierpumpe 12 synchronisiert, so dass die Förderpumpe 6 getrennt und die Dosierpumpe 12 ausschließlich zusammen mit der Förderpumpe 6 zugeschaltet wird. Dadurch kann ein Verunreinigen des Wasservorratsbehälters 5 mit dem Pflegemittel 9 verhindert werden. Die Steuereinrichtung 16 steuert zudem ein Erkennungssystem 17 und ein Füllstanderkennungssystem 18 des Getränkeautomaten 1. Das Erkennungssystem 17 kann ein Anschließen der Kartusche 8 an die Kopplungsvorrichtung 11 und das Füllstanderkennungssystem 18 kann magnetisch oder druckgesteuert einen Füllstand der Kartusche 8 erkennen. Ein steuerbares Meldesystem 19 mit einem Display oder mit einer Lichtanzeige kann dann das Anschließen und den Füllstand der Kartusche 8 an einen Benutzer melden.

Der Getränkeautomat 1 wird in einem Verfahren 20 gesteuert. Dabei fördert die Dosierpumpe 12 beim Pflegen des Getränkeautomaten 1 das unverdünnte Pflegemittel 9 aus der Kartusche 8 über die Dosierleitung 13 in das Fluidsystem 2. Das Pflegemittel 9 fließt dabei an der Mündungsstelle 14 in die Fluidleitungen 3 des Fluidsystems 2 ein und wird mit dem Frischwasser aus dem Wasservorratsbehälter 5 verdünnt. Dabei sind der Arbeitstakt der Förderpumpe 6 und der Arbeitstakt der Dosierpumpe 12 synchronisiert, so dass die Förderpumpe 6 getrennt und die Dosierpumpe 12 ausschließlich zusammen mit der Förderpumpe 6 zugeschaltet wird. Vorteilhafterweise wird dadurch das Frischwasser in dem Wasservorratsbehälter 5 nicht mit dem Pflegemittel 9 verunreinigt und ein zusätzliches Reinigen des Wasservorratsbehälters 5 nach dem Pflegen des Getränkeautomaten 1 entfällt. Die Förderpumpe 6 fördert nun das verdünnte Pflegemittel 9 ab der Mündungsstelle 14 zu den weiteren Komponenten 4 des Getränkeautomaten 1 und das Fluidsystem 2 wird auf diese Weise je nach dem verwendeten Pflegemittel 9 gereinigt und/oder entkalkt.

Die Steuereinrichtung 16 steuert dabei die Förderpumpe 6 und die Dosierpumpe 12 abhängig voneinander. Dabei kann die Förderpumpe 6 um ein Vielfaches öfter als die Dosierpumpe 12 eingeschaltet werden. So kann beispielsweise die Förderpumpe 6 um ein Zehnfaches öfter als die Dosierpumpe 12 eingeschaltet werden, wodurch das Pflegemittel 9 mit dem Frischwasser im Verhältnis 1 zu 10 verdünnt wird. Die Dosiergenauigkeit hängt dabei im Wesentlichen von der Viskosität des Pflegemittels 9 und des Frischwassers sowie von der Förderleistung der Förderpumpe 6 und der Dosierpumpe 12 ab. Das Vielfache kann dabei abhängig von einer Arbeitsbelastung des Getränkeautomaten 1 eingestellt werden, um den Verbrauch des Pflegemittels 9 bei einem in regelmäßigen Abständen gepflegten Getränkeautomat 1 zu reduzieren. Wird der Getränkeautomat 1 schwach beziehungsweise stark belastet, so kann beim Pflegen des Getränkeautomaten 1 das Pflegemittel 9 stärker beziehungsweise schwächer verdünnt werden. Ferner steuert die Steuereinrichtung 16 auch das Erkennungssystem 17 und das Füllstanderkennungssystem 18 und meldet das Anschließen der Kartusche 8 an die Kopplungsvorrichtung 11 sowie den Füllstand der Kartusche 8 über das Meldesystem 19 an einen Benutzer.

Fig. 2 zeigt eine Ansicht der Kartusche 8 mit einem Pflegemittelbeutel 21, der in einem Behältnis 22 angeordnet ist. Der Pflegemittelbeutel 21 ist nach außen dicht, so dass das Pflegemittel 9 in der Kartusche 8 auslaufsicher transportiert und aufbewahrt werden kann. Um beim Leersaugen des Pflegemittels 9 aus dem Pflegemittelbeutel 21 einen Volumenausgleich in dem Behältnis 22 zu ermöglichen, ist in dem Behältnis 22 eine Ausgleichöffnung 23 vorgesehen. Der Kopplungskopf 10 der Kartusche 8 weist eine Verriegelungseinrichtung 24 auf, die mit einem Öffnungselement 25 der Kopplungsvorrichtung 11 zusammenwirkt. In diesem Ausführungsbeispiel sind die Verriegelungseinrichtung 24 ein Sperrventil 24a - hier ein Rücklaufsperrventil - und das Öffnungsmittel 25 ein Ventilöffner 25a. Beim Anschließen der Kartusche 8 an die Kopplungsvorrichtung 11 betätigt und öffnet der Ventilöffner 25a das Sperrventil 24a in der Kartusche 8 und die Kartusche 8 ist fluidleitend über die Dosierleitung 13 an das Fluidsystem 2 angeschlossen. Bei der nicht angeschlossenen Kartusche 8 - wie hier gezeigt - ist das Sperrventil 24a geschlossen und das Pflegemittel 9 auslaufsicher in der Kartusche 8 aufbewahrt.

Fig. 3 zeigt eine Ansicht der alternativ ausgestalteten Kartusche 8, die einen nach außen dichten Pflegemittelbehälter 26 und einen Dichtkolben 27 aufweist. Der Dichtkolben 27 ist in dem Pflegemittelbehälter 26 verschiebbar, so dass das Pflegemittel 9 aus dem Pflegemittelbehälter 26 förderbar ist. Der Dichtkolben 27 ist zu der Ausgleichöffnung 23 hin mittels wenigstens einer Ringdichtung 28 abgedichtet, die ein Auslaufen des Pflegemittels 9 aus dem Pflegemittelbehälter 26 verhindert. Auch in diesem Ausführungsbeispiel weisen der Kopplungskopf 10 der Kartusche 8 die Verriegelungseinrichtung 24 in Form des Sperrventils 24a und die Kopplungsvorrichtung 11 das Öffnungselement 25 in Form des Ventilöffners 25a auf. An der Kartusche 8 ist ferner das Füllstanderkennungssystem 18 festgelegt, das in diesem Ausführungsbeispiel magnetisch ist. Das Füllstanderkennungssystem 18 weist einen Magnetfeldsensor 18a und einen Magnet 18b, die miteinander zusammenwirken. Der Magnetfeldsensor 18a ist an dem Pflegemittelbehälter 26 und der Magnet 18b ist an dem Dichtkolben 27 festgelegt. Beim Leeren der Kartusche 8 nähert sich der Dichtkolben 27 mit dem Magnet 18b an den Magnetfeldsensor 18a und das Füllstanderkennungssystem 18 kann auf diese Weise den Füllstand der Kartusche 8 erkennen.

Insgesamt können das Pflegen des erfindungsgemäßen Getränkeautomaten 1 effektiv und vereinfacht durchgeführt und der Zeitaufwand eines Benutzers deutlich reduziert werden. Vorteilhafterweise kann das Pflegemittel 9 in dem Getränkeautomat 1 präzise dosiert und der Verbrauch des Pflegemittels 9 im Vergleich zu herkömmlichen Lösungen reduziert werden.

### Bezugszeichenliste

- 1: Kaffeemaschine
- 2: Fluidsystem
- 3: Fluidleitungen
- 3a: Schaltvorrichtung
- 4: Komponenten
- 5: Wasservorratsbehälter
- 6: Förderpumpe
- 7: Ansaugstelle
- 8: Kartusche
- 9: Pflegemittel
- 10: Kopplungskopf
- 11: Kopplungsvorrichtung
- 12: Dosierpumpe
- 13: Dosierleitung
- 14: Mündungsstelle
- 15: Auslaufsperrelement
- 16: Steuereinrichtung
- 17: Erkennungssystem
- 18: Füllstanderkennungssystem
- 18a: Magnetfeldsensor
- 18b: Magnet
- 19: Meldesystem
- 20: Verfahren
- 21: Pflegemittelbeutel
- 22: Behältnis
- 23: Ausgleichöffnung
- 24: Verriegelungseinrichtung
- 24a: Sperrventil
- 25: Öffnungselement
- 26: Pflegemittelbehälter
- 27: Dichtkolben
- 28: Ringdichtung

## Patentansprüche

1. Getränkeautomat (1), insbesondere ein Kaffeevollautomat, mit einem Fluidsystem (2) zum Bereitstellen von Frischwasser und einer Förderpumpe (6) zum Fördern von Frischwasser von einer Ansaugstelle (7) durch das Fluidsystem (2), wobei der Getränkeautomat (1) wenigstens eine auswechselbare Kartusche (8) aufweist, die über eine Dosierleitung (13) an einer Mündungsstelle (14) fluidleitend mit dem Fluidsystem (2) verbunden ist, und wobei ein flüssiges Pflegemittel (9) aus der wenigstens einen Kartusche (8) über eine Kopplungsvorrichtung (11) in die jeweilige Dosierleitung (13) und weiter in das Fluidsystem (2) förderbar ist, wobei der Getränkeautomat (1) wenigstens eine Dosierpumpe (12) aufweist, die in dem Getränkeautomat (1) zwischen der jeweiligen Kopplungsvorrichtung (11) und der jeweiligen Mündungsstelle (14) an der jeweiligen Dosierleitung (13) fluidisch angeschlossen ist, **dadurch gekennzeichnet, dass** die Mündungsstelle (14) unmittelbar und stromab an der Ansaugstelle (7) liegt.

2. Getränkeautomat nach Anspruch 1, **dadurch gekennzeichnet, dass** zwischen der Mündungsstelle (14) und der Dosierpumpe (12) ein Auslaufsperrelement (15) vorgesehen ist, wobei das Auslaufsperrelement (15) ein Überdruckventil oder ein steuerbares Ventil, bevorzugt ein Magnetventil, ein keramisches Scheibenventil oder ein Stößelventil, ist.

3. Getränkeautomat nach einem der vorangehenden Ansprüche, **dadurch gekennzeichnet, dass** die Kartusche (8) einen Kopplungskopf (10) aufweist, der an der Kopplungsvorrichtung (11) fluidleitend und lösbar festlegbar ist.

4. Getränkeautomat nach Anspruch 3, **dadurch gekennzeichnet, dass** der Kopplungskopf (10) eine Verriegelungseinrichtung (24) und die Kopplungsvorrichtung (11) ein Öffnungselement (25) aufweisen, wobei die Verriegelungseinrichtung (24) und das Öffnungselement (25) zusammenwirken und die Kartusche (8) und die Dosierleitung (13) fluidisch verbinden.

5. Getränkeautomat nach einem der vorangehenden Ansprüche, **dadurch gekennzeichnet, dass** die Kartusche (8) einen verformbaren und nach außen dichten Pflegemittelbeutel (21) für das Pflegemittel (9) aufweist, oder dass die Kartusche (8) einen nach außen dichten Pflegemittelbehälter (26) und einen in dem Pflegemittelbehälter (26) zumindest zu der Kopplungsvorrichtung (11) hin verschiebbaren Dichtkolben (27) aufweist, und/oder dass die Kartusche (8) nachfüllbar ist.

6. Getränkeautomat nach einem der vorangehenden Ansprüche, **dadurch gekennzeichnet, dass** der Getränkeautomat (1) zwei Kartuschen (8) und zwei Dosierpumpen (12) aufweist, die das Pflegemittel (9) aus der jeweiligen Kartusche (8) in das Fluidsystem (2) fördern, oder dass der Getränkeautomat (1) zwei Kartuschen (8) und eine Dosierpumpe (12) mit einem Umschaltventil aufweist, die das Pflegemittel (9) aus den jeweiligen Kartuschen (8) abwechselnd fördern.

7. Getränkeautomat nach einem der vorangehenden Ansprüche, **dadurch gekennzeichnet, dass** der Getränkeautomat (1) eine Steuereinrichtung (16) aufweist, die die Förderpumpe (6) und die wenigstens eine Dosierpumpe (12) steuert, und dass ein Arbeitstakt der Förderpumpe (6) und ein Arbeitstakt der wenigstens einen Dosierpumpe (12) abhängig voneinander steuerbar sind.

8. Getränkeautomat nach Anspruch 7, **dadurch gekennzeichnet, dass** der Arbeitstakt der Förderpumpe (6) ein Vielfaches des Arbeitstakts der Dosierpumpe (12) ist, wobei das Vielfache von einer Arbeitsbelastung des Getränkeautomaten (1) abhängt.

9. Getränkeautomat nach einem der vorangehenden Ansprüche, **dadurch gekennzeichnet, dass** die Förderpumpe (6) und die Dosierpumpe (12) jeweils als baugleiche Kolbenpumpe ausgestaltet sind.

10. Getränkeautomat nach einem der Ansprüche 7 bis 9, **dadurch gekennzeichnet, dass** der Getränkeautomat (1) ein steuerbares Erkennungssystem (17) aufweist, das ein Anschließen der Kartusche (8) an die Dosierleitung (13) erkennt, und/oder dass der Getränkeautomat (1) ein bevorzugt magnetisches oder druckgesteuertes Füllstanderkennungssystem (18) aufweist, das einen Füllstand des Pflegemittels (9) in der Kartusche (8) erkennt oder aus Kenngrößen einer Pflegehäufigkeit des Getränkeautomaten (1) erschließt.

11. Getränkeautomat nach einem der Ansprüche 7 bis 10, **dadurch gekennzeichnet, dass** der Getränkeautomat (1) ein steuerbares Meldesystem (19) mit einem Display und/oder mit einer Lichtanzeige aufweist, das den Füllstand und/oder das Anschließen der Kartusche (8) an einen Benutzer meldet.

12. Verfahren (20) zum Steuern eines Getränkeautomaten (1) nach einem der Ansprüche 1 bis 11, wobei ein Fluidsystem (2) des Getränkeautomaten (1) Frischwasser bereitstellt, wobei eine Förderpumpe (6) des Getränkeautomaten (1) Frischwasser von einer Ansaugstelle (7) in das Fluidsystem (2) fördert, wobei wenigstens eine auswechselbare Kartusche (8) des Getränkeautomaten (1) über eine Dosierleitung (13) an einer Mündungsstelle (14) in das Fluidsystem (2) fluidisch anschließt, und wobei ein flüssiges Pflegemittel (9) aus der Kartusche (8) über eine Kopplungsvorrichtung (11) in die Dosierleitung und weiter in das Fluidsystem (2) gefördert werden kann, **dadurch gekennzeichnet, dass** eine Steuereinrichtung (16) die Förderpumpe (6) und die wenigstens eine Dosierpumpe (12) steuert, und dass die wenigstens eine Dosierpumpe (12) und die Förderpumpe (6) abhängig voneinander gesteuert werden.

13. Verfahren nach Anspruch 12, **dadurch gekennzeichnet, dass** die Förderpumpe (6) um ein Vielfaches öfter als die Dosierpumpe (12) eingeschaltet wird, wobei die Steuereinrichtung (16) das Vielfache von einer Arbeitsbelastung des Getränkeautomaten (1) abhängig einstellt.

14. Verfahren nach Anspruch 12 oder 13, **dadurch gekennzeichnet, dass** ein Erkennungssystem (17) ein Anschließen der Kartusche (8) an die Dosierleitung (13) erkennt und an die Steuereinrichtung (16) weiterleitet, und/oder dass ein bevorzugt magnetisches oder druckgesteuertes Füllstanderkennungssystem (18) einen Füllstand des Pflegemittels (9) in der Kartusche (8) erkennt und an die Steuereinrichtung (16) weiterleitet.

15. Verfahren nach Anspruch 14, **dadurch gekennzeichnet, dass** ein steuerbares Meldesystem (19) mit einem Display und/oder mit einer Lichtanzeige den Füllstand und/oder das Anschließen der Kartusche (8) an einen Benutzer meldet.

## Claims

1. Beverage vending machine (1), in particular an automatic coffee maker, with a fluid system (2) for providing fresh water and a delivery pump (6) for delivering fresh water from a suction point (7) through the fluid system (2), wherein the beverage vending machine (1) has at least one exchangeable cartridge (8), which is connected in a fluid-conducting manner to the fluid system (2) by way of a dosing pipe (13) at an opening (14), and wherein a liquid care product (9) can be delivered out of the at least one cartridge (8) by way of a coupling device (11) into the respective dosing pipe (13) and further into the fluid system (2), wherein the beverage vending machine (1) has at least one dosing pump (12), which is connected fluidically to the respective dosing pipe (13) in the beverage vending machine (1) between the respective coupling device (11) and the respective opening (14), **characterised in that** the opening (14) rests directly on and downstream of the suction point (7).

2. Beverage vending machine according to claim 1, **characterised in that** an outlet locking element (15) is provided between the opening (14) and the dosing pump (12), wherein the outlet locking element (15) is an overpressure valve or a controllable valve, preferably a solenoid valve, a ceramic disc valve or a pilot valve.

3. Beverage vending machine according to one of the preceding claims, **characterised in that** the cartridge (8) has a coupling head (10), which can be fixed to the coupling device (11) in a fluid-conducting and detachable manner.

4. Beverage vending machine according to claim 3, **characterised in that** the coupling head (10) and the coupling device (11) have a locking device (24) and an opening element (25) in each instance, wherein the locking device (24) and the opening element (25) interact and connect the cartridge (8) and the dosing pipe (13) fluidically.

5. Beverage vending machine according to one of the preceding claims, **characterised in that** the cartridge (8) has a deformable and outwardly tight care product bag (21) for the care product (9) or that the cartridge (8) has an outwardly tight care product container (26) and a sealing piston (27) which can be moved at least toward the coupling device (11) in the care product container (26) and/or that the cartridge (8) can be refilled.

6. Beverage vending machine according to one of the preceding claims, **characterised in that** the beverage vending machine (1) has two cartridges (8) and two dosing pumps (12), which deliver the care product (9) out of the respective cartridge (8) into the fluid system (2), or that the beverage vending machine (1) has two cartridges (8) and a dosing pump (12) with a changeover valve, which deliver the care product (9) out of the respective cartridges (8) alternately.

7. Beverage vending machine according to one of the preceding claims, **characterised in that** the beverage vending machine (1) has a control device (16), which controls the delivery pump (6) and the at least one dosing pump (12) and that a cycle of the delivery pump (6) and a cycle of the at least one dosing pump (12) can be controlled as a function of one another.

8. Beverage vending machine according to claim 7, **characterised in that** the cycle of the delivery pump (6) is a multiple of the cycle of the dosing pump (12), wherein the multiple depends on a workload of the beverage vending machine (1).

9. Beverage vending machine according to one of the preceding claims, **characterised in that** the delivery pump (6) and the dosing pump (12) are each configured as identical piston pumps.

10. Beverage vending machine according to one of claims 7 to 9, **characterised in that** the beverage vending machine (1) has a controllable identification system (17), which identifies a connection of the cartridge (8) to the dosing pipe (13), and/or that the beverage vending machine (1) has a preferably magnetic or pressure-controlled fill level identification system (18), which identifies a fill level of the care product (9) in the cartridge (8) or concludes a care frequency of the beverage vending machine (1) from parameters.

11. Beverage vending machine according to one of claims 7 to 10, **characterised in that** the beverage vending machine (1) has a controllable indication system (19) with a display and/or with a light display, which indicates the fill level and/or the connection of the cartridge (8) to a user.

12. Method (20) for controlling a beverage vending machine (1) according to one of claims 1 to 11, wherein a fluid system (2) of the beverage vending machine (1) provides fresh water, wherein a delivery pump (6) of the beverage vending machine (1) delivers fresh water from a suction point (7) into the fluid system (2), wherein at least one exchangeable cartridge (8) of the beverage vending machine (1) connects fluidically to an opening (14) in the fluid system (2) by way of a dosing pipe (13), and wherein a liquid care product (9) can be delivered out of the cartridge (8) by way of a coupling device (11) into the dosing pipe and further into the fluid system (2), **characterised in that** a control device (16) controls the delivery pump (6) and the at least one dosing pump (12) and that the at least one dosing pump (12) and the delivery pump (6) are controlled as a function of one another.

13. Method according to claim 12, **characterised in that** the delivery pump (6) is switched on by one multiple more often than the dosing pump (12), wherein the control device (16) sets the multiple as a function of a workload of the beverage vending machine (1).

14. Method according to claim 12 or 13, **characterised in that** an identification system (17) identifies a connection of the cartridge (8) to the dosing pipe (13) and forwards the same to the control device (16), and/or that a preferably magnetic or pressure-controlled fill level identification system (18) identifies a fill level of the care product (9) in the cartridge (8) and forwards the same to the control device (16).

15. Method according to claim 14, **characterised in that** a controllable indication system (19) with a display and/or with a light display indicates the fill level and/or the connection of the cartridge (8) to a user.

## Revendications

1. Automate à boissons (1), en particulier une machine à café intégralement automatique, avec un système fluidique (2) pour la mise à disposition d'eau fraîche et une pompe de circulation (6) pour la circulation d'eau fraîche au départ d'un point d'aspiration (7) à travers le système fluidique (2), dans lequel l'automate à boissons (1) présente au moins une cartouche remplaçable (8), reliée de façon conductrice de fluide via une conduite de dosage (13) en un point d'embouchure (14) au système fluidique (2), et dans lequel un agent d'entretien fluide (9) issu de l'au moins une cartouche (8) peut être mu via un dispositif d'accouplement (11) dans la conduite de dosage respective (13) et plus loin dans le système fluidique (2), dans lequel l'automate à boissons (1) présente au moins une pompe de dosage (12) en raccordement fluidique dans l'automate à boissons (1) entre le dispositif d'accouplement respectif (11) et le point d'embouchure respectif (14) sur la conduite de dosage respective (13), **caractérisé en ce que** le point d'embouchure (14) se trouve immédiatement en aval du point d'aspiration (7).

2. Automate à boissons selon la revendication 1, **caractérisé en ce qu'**un élément de blocage d'écoulement (15) est prévu entre le point d'embouchure (14) et la pompe de dosage (12), dans lequel l'élément de blocage d'écoulement (15) est une soupape de surpression ou une soupape commandable, de préférence une électrovanne, une soupape en disque céramique ou une soupape à poussoir.

3. Automate à boissons selon l'une des revendications précédentes, **caractérisé en ce que** la cartouche (8) présente une tête d'accouplement (10) pouvant être fixée de façon conductrice de fluide et amovible sur le dispositif d'accouplement (11).

4. Automate à boissons selon la revendication 3, **caractérisé en ce que** la tête d'accouplement (10) présente un dispositif de verrouillage (24) et le dispositif d'accouplement (11) présente un élément d'ouverture (25), dans lequel le dispositif de verrouillage (24) et l'élément d'ouverture (25) collaborent et relient fluidiquement la cartouche (8) à la conduite de dosage (13).

5. Automate à boissons selon l'une des revendications précédentes, **caractérisé en ce que** la cartouche (8) présente un sachet à agent d'entretien (21) déformable et étanche vers l'extérieur pour l'agent d'entretien (9), ou **en ce que** la cartouche (8) présente un contenant d'agent d'entretien (26) étanche vers l'extérieur et un piston d'étanchéité (27) déplaçable dans le contenant d'agent d'entretien (26) au moins vers le dispositif d'accouplement (11) et/ou **en ce que** la cartouche (8) est rechargeable.

6. Automate à boissons selon l'une des revendications précédentes, **caractérisé en ce que** l'automate à boissons (1) présente deux cartouches (8) et deux pompes de dosage (12) qui meuvent l'agent d'entretien (9) en dehors de la cartouche respective (8) dans le système fluidique (2) ou **en ce que** l'automate à boissons (1) présente deux cartouches (8) et une pompe de dosage (12) avec une soupape d'inversion, qui meuvent alternativement l'agent d'entretien (9) en dehors des cartouches respectives (8).

7. Automate à boissons selon l'une des revendications précédentes, **caractérisé en ce que** l'automate à boissons (1) présente un dispositif de commande (16) qui commande la pompe de circulation (6) et l'au moins une pompe de dosage (12) et **en ce qu'**une cadence de travail de la pompe de circulation (6) et une cadence de circulation de l'au moins une pompe de dosage (12) sont commandables dépendamment l'une de l'autre.

8. Automate à boissons selon la revendication 7, **caractérisé en ce que** la cadence de travail de la pompe de circulation (6) est un multiple de la cadence de travail de la pompe de dosage (12), dans lequel le multiple dépend d'une charge de travail de l'automate à boissons (1).

9. Automate à boissons selon l'une des revendications précédentes, **caractérisé en ce que** la pompe de circulation (6) et la pompe de dosage (12) sont respectivement configurées sous la forme d'une pompe à piston de construction identique.

10. Automate à boissons selon l'une des revendications 7 à 9, **caractérisé en ce que** l'automate à boissons (1) présente un système de détection (17) commandable, lequel détecte un raccordement de la cartouche (8) à la conduite de dosage (13) et/ou **en ce que** l'automate à boissons (1) présente un système de détection du niveau de remplissage (18) de préférence magnétique ou commandé par pression, qui détecte un niveau de remplissage de l'agent d'entretien (9) dans la cartouche (8) ou l'établit au départ de caractéristiques d'une fréquence d'entretien de l'automate à boissons (1).

11. Automate à boissons selon l'une des revendications 7 à 10, **caractérisé en ce que** l'automate à boissons (1) présente un système de notification commandable (19) avec un écran et/ou avec un voyant lumineux indiquant à un utilisateur le niveau de remplissage et/ou le raccordement de la cartouche (8).

12. Procédé (20) pour la commande d'un automate à boissons (1) selon l'une des revendications 1 à 11, dans lequel un système fluidique (2) de l'automate à boissons (1) met de l'eau fraîche à disposition, dans lequel une pompe de circulation (6) de l'automate à boisson (1) meut de l'eau fraîche au départ d'un point d'aspiration (7) dans le système fluidique (2), dans lequel au moins une cartouche remplaçable (8) de l'automate à boissons (1) est reliée de façon conductrice de fluide via une conduite de dosage (13) en un point d'embouchure (14) au système fluidique (2) et dans lequel un agent d'entretien fluide (9) peut être mu en dehors de la cartouche (8) à travers un dispositif d'accouplement (11) dans la conduite de dosage et plus loin dans le système fluidique (2), **caractérisé en ce qu'**un dispositif de commande (16) commande la pompe de circulation (6) et l'au moins une pompe de dosage (12) et **en ce que** l'au moins une pompe de dosage (12) et la pompe de circulation (6) sont commandées dépendamment l'une de l'autre.

13. Procédé selon la revendication 12, **caractérisé en ce que** la pompe de circulation (6) est activée un multiple de fois plus souvent que la pompe de dosage (12), dans lequel le dispositif de commande (16) règle dépendamment le multiple en fonction d'une charge de travail de l'automate à boissons (1).

14. Procédé selon la revendication 12 ou 13, **caractérisé en ce qu'**un système de détection (17) détecte un raccordement de la cartouche (8) à la conduite de dosage (13) et le transmet au dispositif de commande (16) et/ou **en ce qu'**un système de détection du niveau de remplissage (18) de préférence magnétique ou commandé par pression détecte un niveau de remplissage de l'agent d'entretien (9) dans la cartouche (8) et le transmet au dispositif de commande (16).

15. Procédé selon la revendication 14, **caractérisé en ce qu'**un système de notification commandable (19) avec un écran et/ou avec un voyant lumineux indique à un utilisateur le niveau de remplissage et/ou le raccordement de la cartouche (8).
